# FASCICULE DE BREVET EUROPEEN

(11) **EP 2 676 340 B1**
(45) Date de publication et mention de la délivrance du brevet: **13.06.2018**
(21) Numéro de dépôt: 12709915.8
(22) Date de dépôt: 16.02.2012
(51) Int. Cl.: H01S 3/094

(54) **DISPOSITIF DE POMPAGE OPTIQUE.**
OPTISCHE PUMPVORRICHTUNG
OPTICAL PUMPING DEVICE

(30) Priorité: 16.02.2011 FR 1151276
(43) Date de publication de la demande: 25.12.2013
(73) Titulaire: Université Bordeaux 1, 33405 Talence Cedex (FR)
(72) Inventeur: CORMIER, Eric, F-33610 Cestas (FR); LHERMITE, Jérôme, F-64600 Anglet (FR); DESCAMPS, Dominique, F-33170 Gradignan (FR); MACHINET, Guillaume, F-33400 Talence (FR)
(74) Mandataire: Novagraaf Technologies
(86) Numéro de dépôt international: PCT/FR2012/050331
(87) Numéro de publication internationale: WO 2012/110748

(56) Documents cités:
- EP-A1- 1 146 612
- WO-A1-2009/021312
- WO-A1-2010/083595
- US-A1- 2001 036 205
- US-A1- 2005 213 616
- US-A1- 2005 281 301
- US-A1- 2006 146 901
- KARPOV V I ET AL: "LD-PUMPED 1.48-MUM LASER BASED ON YB-DOPED DOUBLE-CLAD FIBER AND PHOSPHOROSILICATE-FIBER RAMAN CONVERTER", OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999; [OPTICAL FIBER COMMUNICATION CONFERENCE / INTERNATIONAL CONFERENCE ON INTEGRATED O, 21 février 1999 (1999-02-21), pages WM3-01, XP000966930, ISBN: 978-0-7803-5430-2
- FU Y ET AL: "Beam quality factor of mixed modes emerging from a multimode step-index fiber", OPTIK, WISSENSCHAFTLICHE VERLAG GMBH, DE, vol. 121, no. 5, 1 mars 2010 (2010-03-01), pages 452-456, XP026926949, ISSN: 0030-4026, DOI: 10.1016/J.IJLEO.2008.08.003 [extrait le 2009-01-21]

## Description

### DOMAINE TECHNIQUE DE L'INVENTION

La présente invention se rapporte à un dispositif de pompage optique. Ce dispositif est particulièrement adapté pour l'amplification et/ou le guidage d'un faisceau laser ainsi que pour la réalisation d'un oscillateur laser. Il peut être utilisé dans tous les domaines d'application utilisant la lumière laser. En outre, la présente invention concerne également une architecture d'amplification laser comportant ce dispositif de pompage optique.

### ETAT DE LA TECHNIQUE ANTERIEURE

L'essor des lasers de puissance, commencé depuis plusieurs décennies a ouvert la voie à la découverte et à l'étude de multiples phénomènes physiques au travers de la mise en oeuvre de nombreuses applications scientifiques nécessitant pour certaines des performances laser exceptionnelles.

Les architectures, telles que des oscillateurs ou encore des amplificateurs à multipassage ou régénérateur, qui sont susceptibles de produire de tels lasers doivent alors mettre en oeuvre un dispositif optique de pompage adéquat.

Le pompage optique réalisée par de tels dispositifs correspond à un procédé d'inversion de population consistant à faire passer des ions de leur état non excité vers un état excité en leurs faisant chacun absorber un photon.

Le pompage optique peut être utilisé lors de la création d'un faisceau laser, c'est à dire pour inverser la population dans un milieu actif se trouvant dans un oscillateur laser, ou bien pour amplifier et/ou guider un faisceau laser existant, par exemple émis par une diode laser, en le faisant traverser un milieu actif d'un dispositif de pompage optique. En pratique, le pompage optique consiste à envoyer un ou plusieurs faisceaux lumineux, appelés faisceaux de pompe, dans le milieu actif, lui-même traversé par un faisceau émis par une source laser, appelé faisceau signal laser.

Pour ce faire ces dispositifs de pompage optique comprennent généralement une source de pompage optique spécifique qui doit avoir une excellente qualité de faisceau avec une puissance très élevée apte à fournir la plus grande luminosité possible.

De telles sources se rapportent par exemple à des diodes laser. Ces diodes lasers sont capables de délivrer des puissances de plusieurs kW à 976 nm.

Cependant, la brillance est sévèrement limitée par la grande surface d'émission et la nécessité de mettre en forme les faisceaux venant des différents émetteurs de l'empilement à barrettes de diodes. Il est possible d'obtenir une bonne qualité spatiale de ces diodes lasers (on parle alors d'émission « monomode transverse», où le faisceau émis est en limite de diffraction), mais la puissance maximale actuellement réalisée varie de quelques centaines de mW à quelques Watts avec l'utilisation des structures spéciales.

Le choix de l'utilisation de sources lasers dans la gamme de longueur d'onde infrarouge est justifié par les avantages qu'elles confèrent, en particulier : leur compacité, leur longévité, leur grande efficacité électrique ou leur faible coût de fabrication.

Toutefois, le choix de ces diodes lasers ne peut être qu'un compromis entre puissance et qualité de faisceau, ce qui constitue un inconvénient indéniable dans les situations où une forte densité de puissance est requise.

Bien que ces diodes laser soient de forte puissance elles ne sont pas brillantes et ne peuvent contribuer à la réalisation d'un pompage haute brillance de matériaux dopés.

D'autres sources sont connues de l'art antérieur comme par exemple les diodes laser à semi-conducteurs tels que les OPSLs (acronyme anglais de Optically Pumped Semiconductor Laser) qui sont des émetteurs laser basés sur des demi-VCSEL (acronyme anglais de Vertical-Cavity Surface-Emitting Laser qui signifie Diode laser à cavité verticale émettant par la surface). L'épaisseur réduite de ces semi-conducteurs permet un pompage optique avec des diodes de forte puissance mais à faible luminosité.

Un inconvénient majeur de ce type de diodes est qu'elles présentent des caractéristiques thermiques contraignantes qui limitent leur utilisation. Ces diodes requièrent, en effet, d'importants moyens de refroidissements pour un fonctionnement normal.

En outre, ces sources présentent une stabilité de pointé supérieure aux diodes conventionnelles. Enfin, bien qu'elles constituent à ce jour les sources commerciales les plus brillantes, leur coût est très élevé.

On connaît par ailleurs dans l'art antérieur, des architectures de lasers dont le milieu amplificateur est un matériau dopé par des ions Yb utilisés pour réaliser des sources laser sensiblement à 976 nm.

Ces architectures lasers comprennent des dispositifs de pompage optique émettant dans la bande spectrale 910nm-940nm.

Les solutions basées sur des matériaux dopés par des ions de terres rares, par exemple des ions Ytterbium, pompées par diode, utilisent soit des cristaux soit des fibres optiques dans lesquels sont incorporés les ions dopants. La solution fibrée a l'avantage d'être avec une solution entièrement fibrée et donc compacte, ultrastable et fiable.

De plus, la solution apportée par les milieux amplificateurs solides dopés aux ions de terres rares et émettant à sensiblement 976nm permet de réaliser une conversion opto-optique entre la puissance apportée par la pompe et la puissance délivrée par le laser pouvant aller jusqu'à 80%.

Cependant, l'émission d'un milieu amplificateur solide (cristal ou silice) dopé aux ions ytterbium à sensiblement la longueur d'onde laser de 977 nm implique des contraintes fortes sur la géométrie de l'amplificateur (section transverse et longueur du milieu amplificateur), du faisceau de pompage et du niveau de pompage.

On constate donc qu'un inconvénient majeur de l'utilisation de ces différentes sources lumineuses, réside dans le fait que bien qu'elles soient de forte puissance pour certaines, elles ne sont pas suffisamment brillantes pour contribuer à un pompage optique haute brillance de matériaux dopés avec un dopant de terre rare.

On connaît par ailleurs de l'art antérieur, par exemple du document US 2001/036205 un dispositif de pompage optique comportant une source optique à fibre permettant de pomper un élément en matériau amplificateur dopé à l'Erbium.

### EXPOSE DE L'INVENTION

L'invention propose donc d'améliorer le pompage optique pour l'amplification laser de matériaux dopés terres rares, effectué par des dispositifs de pompage optique mis en oeuvre dans des architectures d'amplificateur laser. Dans ce dessein, un aspect de l'invention se rapporte à un dispositif de pompage optique comportant :
- une source optique à fibre émettant un rayonnement de qualité modale transverse très élevée contrôlé à une longueur d'onde inférieure à 1000 nm,
- au moins un élément en matériau amplificateur dopé avec un dopant de terre rare,
- des moyens pour introduire une lumière de pompage dans ledit élément matériau amplificateur dopé, et
- des moyens de refroidissement dudit matériau amplificateur,
dans lequel la lumière de pompage est émise par la source optique à fibre à une puissance moyenne supérieure à 2 W et une qualité modale caractérisée par un M2 < 5.

L'invention est précisément définie par la revendication 1.

Selon des modes de réalisation particuliers :
- la source à fibre comprend :
   ▪ au moins une diode laser ayant une longueur d'onde d'excitation comprise entre 750 nm et 976 nm, apte à émettre une onde de pompe ;
   ▪ une gaine de pompage ;
   ▪ un tronçon de fibre optique amplificatrice gainée présentant deux extrémités, ladite fibre optique amplificatrice comportant un coeur comprenant une partie cylindrique dopée avec une terre rare choisie parmi l'Ytterbium, Erbium, Thulium, pour obtenir un indice de réfraction du coeur supérieur à celui de la gaine ;
   ▪ des moyens de couplage de ladite source de pompe dans la gaine de de la fibre dopée ;
- la source à fibre a un spectre d'émission compris dans une bande 970-985 nm ;
- l'élément en matériau amplificateur dopé avec un dopant de terre rare est choisi parmi une fibre optique, un cristal, une combinaison de ces deux éléments ;
- la fibre est choisie parmi une fibre simple coeur, une fibre double coeur, une fibre cristalline ;
- les moyens de refroidissement sont agencés le long du l'élément en matériau amplificateur dopé ;
- les moyens de refroidissement réalisent un refroidissement dudit élément en matériau amplificateur dopé par air, par eau ou par effet Peltier ou encore par cryogénique ;
- la terre rare est choisie parmi l'Ytterbium, Thulium, Erbium, ou l'une quelconque des combinaisons de ces terres rares ;
- les combinaisons sont choisies parmi Thulium/Ytterbium, Erbium/Ytterbium ;
- l'Ytterbium utilisée est choisie parmi Yb :SYS, Yb :BOYS, Yb :GdCoB, Yb:CaGdAlO4 Yb:KGW, Yb:YAG, Yb:CaF2, Yb:KGW, Yb :KYW, Yb:GSO Yb :GYSO, Yb :verre ;
- les moyens permettant d'introduire une lumière de pompage dans le matériau amplificateur se rapportent à des moyens de couplage et des éléments sélectifs ;
- les moyens de couplage comprennent des lentilles choisies parmi l'une quelconque au moins des lentilles suivantes: microlentille, lentille cylindrique, elliptique, hyperbolique, ou des condensateurs asphériques, et des miroirs sphériques ou paraboliques ;
- les éléments sélectifs se rapportent à un élément choisi parmi l'un quelconque au moins des éléments suivants: un miroir dichroïque, un filtre absorbant ou interférométrique ou acousto optique, une courbure de la fibre amplificatrice, un élément dopant ajouté dans la constitution du coeur de la fibre amplificatrice, un réseau massif externe, un prisme, un réseau de Bragg.

L'invention se rapporte également à une architecture d'amplificateur comportant des moyens de pompage optique comprenant un dispositif de pompage optique tel que défini aux revendications 1 à 13.

Selon des modes de réalisation particuliers :
- l'architecture d'amplificateur se rapporte à l'un des dispositifs suivants :
   ▪ un oscillateur ;
   ▪ un amplificateur simple passage ou multipassage ;
   ▪ un amplificateur régénérateur ;
   ▪ une architecture de pompage coeur d'une fibre active dopée Yb, Tm, Er ou une quelconque combinaison, et
   ▪ une architecture de pompage d'une fibre cristalline où le faisceau de pompe n'est pas guidé par ladite fibre cristalline.
- l'architecture d'amplificateur est apte à produire un rayonnement à une longueur d'onde supérieure à 1000 nm dont l'amplification est obtenue à partir du dispositif de pompage optique défini aux revendications 1 à 13.

### BREVE DESCRIPTION DES FIGURES

D'autres caractéristiques et avantages de l'invention ressortiront à la lecture de la description qui suit, en référence aux figures annexées, qui illustrent à :
- la figure 1, une vue en coupe d'une fibre utilisée par la source optique dans un mode de réalisation de la présente invention ;
- la figure 2, une représentation d'une première architecture amplificateur laser se rapportant à un oscillateur ;
- la figure 3, une représentation d'une deuxième architecture amplificateur laser se rapportant à un oscillateur ;
- la figure 4, une représentation d'une troisième architecture amplificateur laser se rapportant à un oscillateur ;
- la figure 5, une représentation d'une quatrième architecture amplificateur laser se rapportant à un oscillateur ;
- la figure 6, une représentation d'une cinquième architecture amplificateur laser se rapportant à un amplificateur régénérateur ;
- la figure 7, une représentation d'une sixième architecture amplificateur laser se rapportant à un amplificateur régénérateur ;
- la figure 8, une représentation d'une septième architecture amplificateur laser se rapportant à un amplificateur multipassage ;
- la figure 9, une représentation d'une huitième architecture amplificateur laser se rapportant à un amplificateur multipassage ;

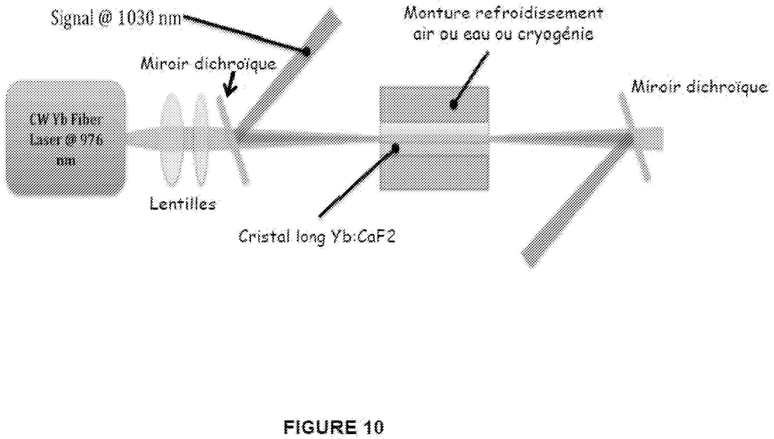

- la figure 10, une représentation d'une neuvième architecture amplificateur laser se rapportant à un amplificateur de puissance.

Pour plus de clarté, les éléments identiques ou similaires sont repérés par des signes de référence identiques sur l'ensemble des figures.

### DESCRIPTION DETAILLEE D'UN MODE DE REALISATION

Dans un exemple de réalisation, le dispositif de pompage optique comprend une source optique à fibre émettant un rayonnement de qualité modale transverse très élevée contrôlé à une longueur d'onde inférieure à 1000 nm.

On entend par très élevée un mode proche de la limite de diffraction caractérisé par un facteur M2 proche de 1 et inférieur à 5 et ceci quelque soit la puissance délivrée.

La fibre de cette source optique dont on retrouve ci-après une description, est sensiblement similaire à celle décrite dans les documents de brevet français N° FR09/05271 et N° FR08/55879.

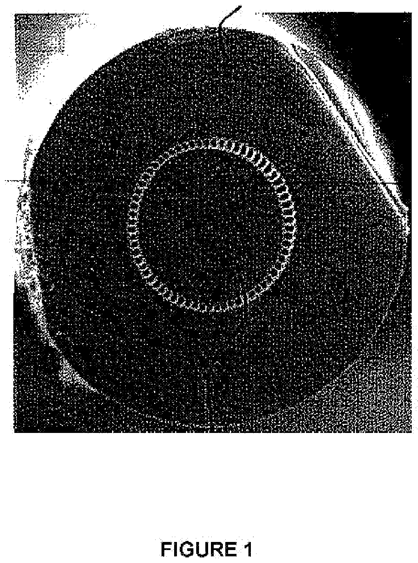

La figure 1 représente une vue en coupe d'une fibre selon un mode de réalisation de l'invention.

La fibre est une fibre « air-clad » avec un diamètre extérieur de 200 µm, un diamètre de gaine de 80 µm et un diamètre de coeur de 20 µm. Le coeur de la fibre est constitué d'une zone cylindrique avec un indice de réfraction supérieur à celui de la gaine. Ce coeur est dopé sur tout son volume avec l'élément terre rare Yb, ainsi qu'avec un ou plusieurs co-dopants choisi parmi P, Ce, Al, Ge. Le guide multi-mode est défini par l'air-clad.

On notera que dans d'autres modes de réalisation d'autres fibres du type fibre sans air clad et non microstructurée présentant les mêmes propriétés et avantages que la fibre à air clad et microstructurée décrite en Figure 1, peuvent également être mis en oeuvre dans la présente invention.

Dans le cas idéal, cette fibre présenterait un diamètre de coeur d'environ 25 µm et un diamètre de gaine d'environ 100 µm (ratio de surface entre la gaine et le coeur de 16). Un diamètre de coeur entre 10 et 30 µm est acceptable pour l'application. De préférence, le ratio de surface entre la gaine et le coeur de la fibre sera entre 6 et 25 pour une opération laser efficace à 976 nm. Il apparaît qu'au-delà d'un ratio de 50 le rayon laser à 976 nm est difficilement observable.

On notera, alternativement que le diamètre de la gaine peut être supérieur à 50 micromètres avec un rapport des surfaces entre le coeur dopé et la gaine de pompe est comprise entre 3 et 50.

Le coeur, d'une ouverture numérique de 0,06, est faiblement multi-mode à 976 nm. La surface de la gaine de pompe est environ 10 fois plus importante que celle décrite dans le document Yllä Jarkko et al, « A 3.5 W 977nm jacketed air clad fiber laser ytterbium doped fiber laser », OSA Trends in Optics and Photonics, Advanced Solid State Lasers Vol. 34, 2000).

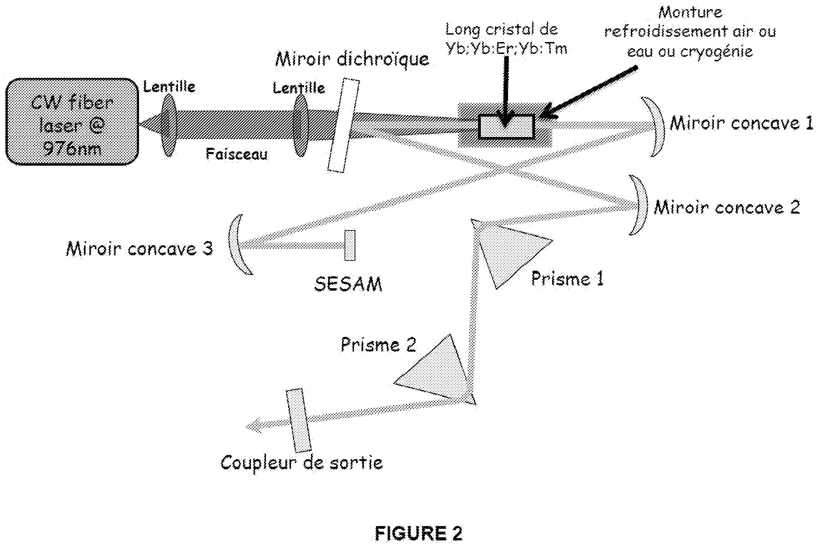

Elle permet l'injection de plusieurs dizaines de Watts de pompe. Les performances laser à 976 nm (figure 2) présentent une puissance de sortie de 10W à 976 nm et un très faible niveau d'ASE à 1030 nm. Cette puissance, limitée seulement par la puissance de pompe disponible, est trois fois supérieure au record précédent dans une fibre souple. L'efficacité du système (30%) est limitée par le taux de couplage de la pompe dans l'air-clad (l'ouverture numérique de l'air-clad était de 0,4, mais une ouverture numérique supérieur à 0,6 est envisageable).

Compte tenu du niveau de brillance des diodes actuelles, il est envisageable d'injecter plus de 100W dans une telle fibre, ce qui donne une puissance de sortie supérieure à 50W à 976 nm pour un rendement raisonnable de 50%.

Une telle fibre permet en premier lieu d'améliorer la qualité spatiale en sortie.

La qualité spatiale d'un mode optique est définie par le paramètre M2, où M2=1 correspond à un mode parfaitement gaussien à la limite de diffraction. Le paramètre M2 en sortie est mesuré pour un laser conforme à l'invention est de 1,17 pour une fibre roulée autour d'un mandrin de diamètre 210 mm. Malgré le caractère multi-mode de la fibre, le laser oscille naturellement sur le mode fondamental, aidé par la légère courbure qui crée des pertes différentielles accrues sur les modes d'ordre supérieur.

Une telle fibre permet également d'améliorer la qualité spectrale. Une cavité laser définie par de simples miroirs ne présente pas de sélection spectrale. L'émission laser se présente alors sous la forme d'une multitude de lignes autour du maximum du gain à 976 nm (free running laser).

Cette source optique à fibre est apte à émettre une lumière de pompage à une puissance moyenne supérieure à 2 W et une qualité modale caractérisée par un M2 < 5. Une version de 94 W en configuration free running laser a déjà été réalisée avec une fibre du type rod-type. Cependant un effort particulier doit être fait pour opérer ce laser avec un filtre spectral performant imposant un rayon laser émettant sur une bande étroite tout en étant accordable en longueur d'onde (970-985nm) à des puissances de plusieurs dizaines de Watts.

Cette source de pompage optique peut être opérée soit en configuration laser (cavité laser avec filtre spectral), soit en source d'ASE (Amplified Spontaneous Emission) soit en configuration MOPA (Master Oscillator Power Amplifier) avec comme source initiale soit un laser fibré de faible puissance, soit une diode monomode de faible puissance soit une source d'ASE amplifiée par la suite dans un amplificateur de puissance fibré. Pour le pompage des matériaux Yb, la configuration en source d'ASE est particulièrement pratique à l'utilisation.

Ce dispositif de pompage comprend également un élément en matériau amplificateur dopé avec un dopant de terre rare. Cet élément en matériau amplificateur dopé se rapporte par exemple à une fibre optique ou encore à un cristal ou encore à un verre, ou encore à une combinaison de ces éléments.

Cette fibre optique peut correspondre à une fibre simple coeur dont le pompage optique s'effectue directement dans le coeur, une fibre double coeur ou à une fibre cristalline.

Cette fibre peut également se rapporter de manière non limitative à une fibre à air clad et microstructurée ou à l'inverse à une fibre sans air clad et non microstructurée.

Cet élément en matériau amplificateur dopé se rapporte également à un cristal ou un verre qui peut avoir une taille, longue ou courte, et qui peut de manière non limitative être comprise entre 100 micromètres et 50 centimètres.

Ce matériau est dopé avec au moins une terre rare choisie parmi l'Ytterbium,Thulium, Erbium,ou l'une quelconque des combinaisons de ces terres rares telles que : Thulium/Ytterbium, Erbium/Ytterbium.
On remarquera que l'Ytterbium utilisée est choisie parmi : Yb :SYS, Yb :BOYS, Yb :GdCoB, Yb:CaGdAlO4 Yb:KGW, Yb:YAG, Yb:CaF2, Yb:KGW, Yb :KYW, Yb:GSO ou Yb :GYSO, ou encore Yb :verre.

A partir de la source optique un pompage haute brillance est réalisé autour de 976 nm pour l'absorption des ions Ytterbium. Le dispositif de pompage est en effet particulièrement adapté pour le pompage optique de ce type d'ions à cette longueur d'onde de 976 nm.

Cependant, à la longueur d'onde autour de 976 nm ce dispositif de pompage optique peut également pomper optiquement de manière non limitative d'autres ions de différents matériaux tels que le Thulium (Tm) ou Erbium (Er), ou encore des matériaux codopés Thulium/Ytterbium, Erbium/Ytterbium.

On notera en particulier qu'en utilisant des matériaux codopés Thulium/Ytterbium, Erbium/Ytterbium, il est possible d'utiliser la longueur d'onde d'absorption des ions Ytterbium (Yb) (environ 976 nm de longueur d'onde) pour réaliser un transfert d'énergie de l'état excité de l'Ytterbium (Yb) à celui des ions Thulium (Tm) ou Erbium (Er) dans l'optique de générer une inversion de population entre les niveaux de lasing Er ou Tm.

Ce dispositif de pompage optique comporte des moyens permettant d'introduire une lumière de pompage dans le matériau amplificateur se rapportant à des moyens de couplage et des éléments sélectifs.

Ces moyens de couplage comprennent des lentilles choisies parmi l'une quelconque au moins des lentilles suivantes: microlentille, lentille cylindrique, elliptique, hyperbolique, ou des condensateurs asphériques.

Les éléments sélectifs correspondent de manière non exhaustive aux éléments suivants: un miroir dichroïque, un filtre absorbant ou interférométrique ou un fitre actif du type électro optique ou acousto optique, une courbure de la fibre amplificatrice, un élément dopant ajouté dans la constitution du coeur de la fibre amplificatrice, un réseau massif externe, un prisme, un réseau de Bragg.

Dans ce dispositif de pompage optique, des moyens de refroidissement sont prévus de sorte à refroidir l'élément en matériau amplificateur dopé, par air, eau, par effet Peltier ou encore par cryogénie.

Ainsi ce dispositif de pompage optique permet donc de réaliser un pompage haute brillance de matériaux dopés à Ytterbium, et également au Thulium ou encore l'Erbium (Er).

Ce pompage haute brillance n'est pas réalisable à partir de diodes lasers de forte puissance car elles ne sont pas brillantes. Grâce à la source optique très brillante à 976 nm de ce dispositif de pompage optique, ce pompage haute brillance de matériaux dopés à Ytterbium devient possible.

Un tel dispositif de pompage optique comportant une source optique correspondant à ce laser à fibre de forte puissance lequel permet de pomper optiquement des matériaux solides à base d'Ytterbium, peut être mis en oeuvre dans différentes architectures d'amplification telles que :
- un oscillateur ;
- un amplificateur simple passage ou multipassage ;
- un amplificateur régénérateur ;
- une architecture de pompage coeur d'une fibre active dopée Yb, Tm, Er ou une quelconque combinaison, et
- une architecture de pompage d'une fibre cristalline où le faisceau de pompe n'est pas guidé par ladite fibre cristalline.

A la figure 2, une première architecture se rapportant à un oscillateur à blocage de modes par lentille de Kerr est décrite. La cavité est composée de plusieurs miroirs concaves, d'une ligne à prisme permettant de compenser la dispersion, d'un SESAM amorçant le régime de fonctionnement à modes bloqués, d'un coupleur de sortie refermant la cavité laser et d'un long cristal dopé Yb ou codopé Yb :Er ou Yb :Tm.

Ce dernier peut être refroidi par air, eau ou cryogénie. Il est pompé par la source laser fibrée forte brillance émettant autour de 976 nm par l'intermédiaire de deux lentilles et d'un miroir dichroïque.

Une telle source laser fibrée permet d'utiliser au sein de l'oscillateur un cristal long (entre 0.5 et 50 mm) tout en conservant un bon recouvrement entre le signal et la pompe sur toute la longueur du cristal.

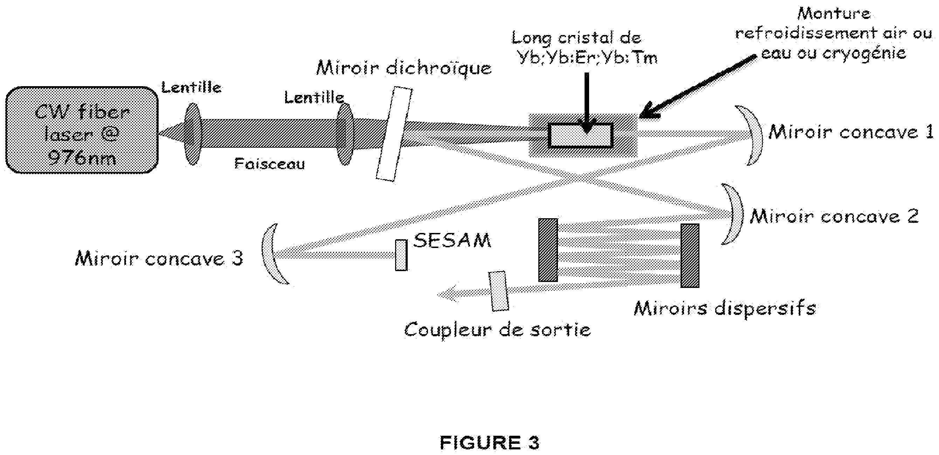

A la figure 3, une deuxième architecture se rapportant à un oscillateur à blocage de modes par lentille de Kerr est décrite, elle repose dans le cadre de son architecture et de son fonctionnement sur le même principe que la figure 2. Seule la ligne à prisme est remplacée par une paire de miroirs dispersifs.

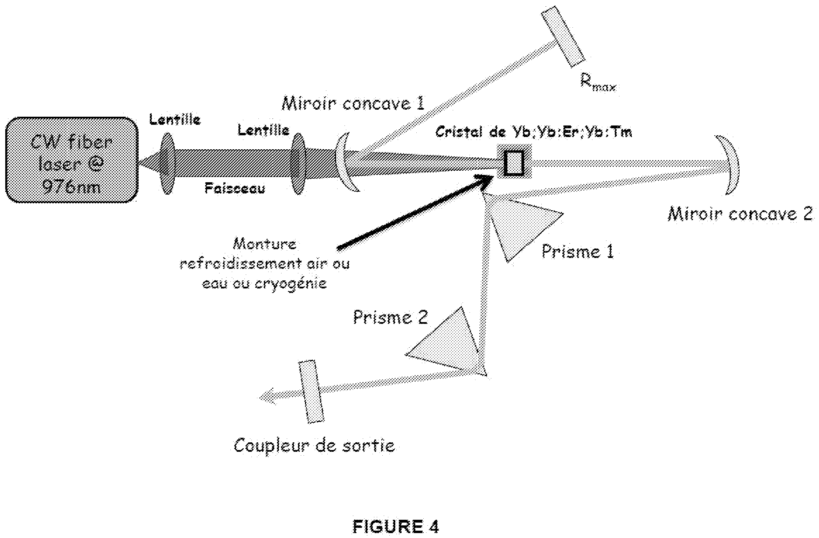

A la figure 4, une troisième architecture se rapportant à un oscillateur à blocage de modes par lentille de Kerr est décrite. La cavité est composée de plusieurs miroirs concaves, d'une ligne à prisme permettant de compenser la dispersion, d'un coupleur de sortie refermant la cavité laser et d'un cristal dopé Yd ou codopé Yb :Er ou Yb :Tm.

Ce cristal peut être refroidi par air, eau ou cryogénie. Il est pompé par la source laser fibrée forte brillance émettant autour de 976 nm. Une telle source permet d'obtenir par focalisation dans le cristal des faisceaux beaucoup plus petit qu'avec une pompe multimode.

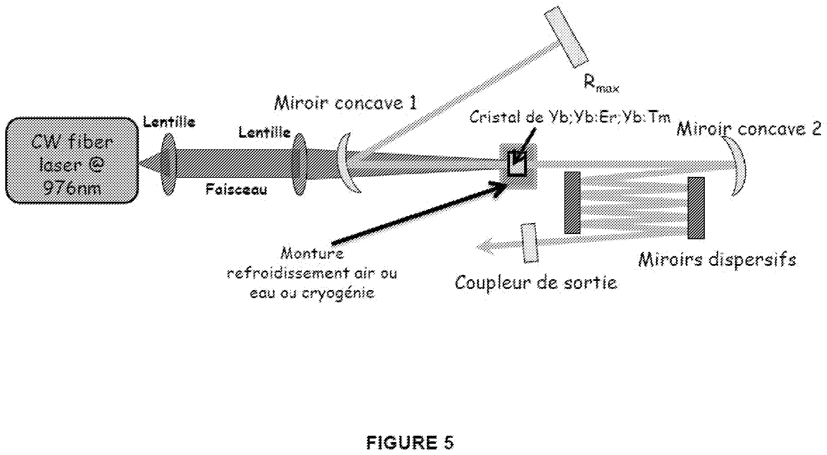

A la figure 5, une quatrième architecture se rapportant à un oscillateur à blocage de modes par lentille de Kerr est décrite. Cette architecture repose sur le même principe que celui de la figure 4 à la différence que la ligne à prisme est remplacée par une paire de miroirs dispersifs.

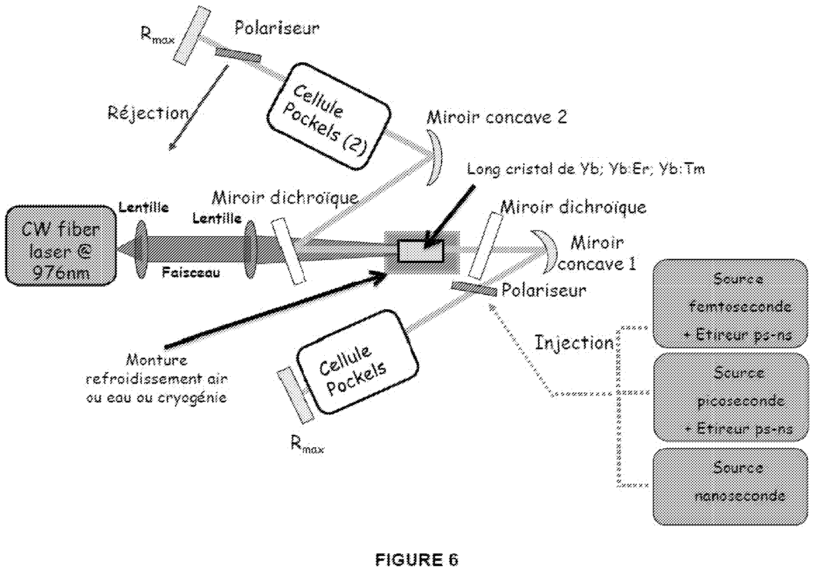

A la figure 6, une représentation d'une septième architecture d'amplification laser se rapportant à un amplificateur régénératif.

Cette architecture se compose d'une cavité formée de miroirs plans et de miroirs concaves. Le signal à amplifier est injecté par le polariseur et la première cellule de Pockels. L'impulsion est alors piégée dans la cavité et va à chaque passage dans le milieu amplificateur extraire de l'énergie et être amplifiée.

Une fois le gain désiré obtenu correspondant à autant d'aller-retour, la deuxième cellule de Pockels va agir comme interrupteur en changeant la polarisation de l'impulsion lumineuse amplifiée, et cette dernière va alors pouvoir être rejetée par le biais d'un second polariseur.

L'utilisation de la source forte brillance permet d'utiliser des faisceaux plus gros et donc de repousser le seuil de dommage des optiques constituant la cavité et donc d'augmenter l'énergie amplifiée par la cavité régénérative.

De plus compte tenue de la très bonne qualité spatiale du faisceau du dispositif de pompage, un miroir dichroïque concave peut être utilisé à la place du miroir dichroïque plan pour injecter la pompe afin de focaliser plus fortement ce faisceau.

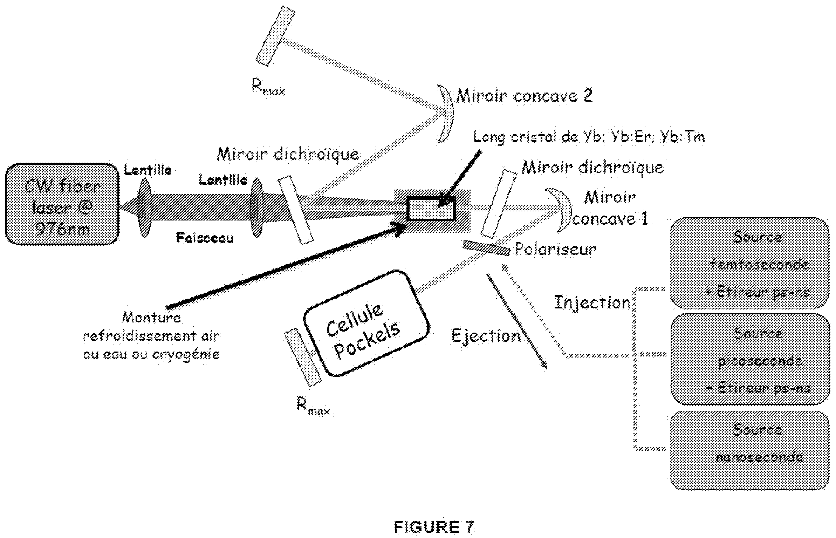

A la figure 7, une sixième architecture se rapportant à un amplificateur régénérateur est décrite. Elle repose sur le même principe que celui de la figure 6 à la différence que seule une cellule de Pockels et un seul polariseur sert à injecter et éjecter l'impulsion du faisceau laser.

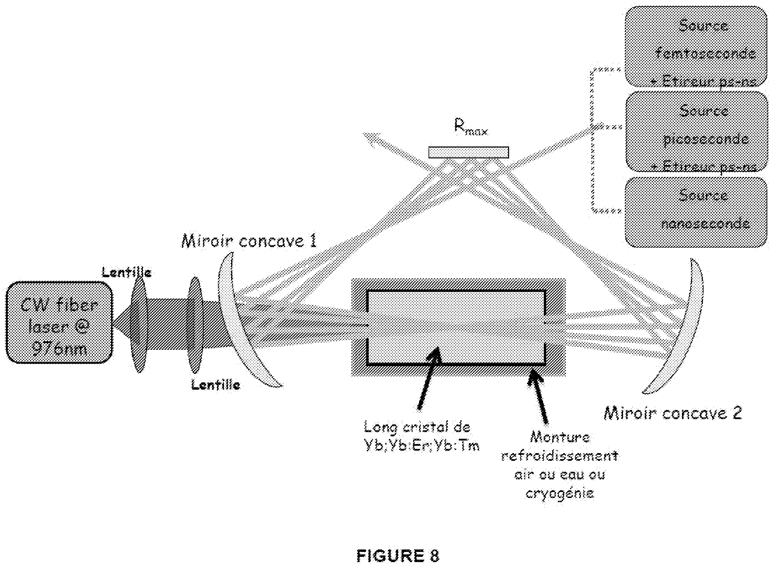

A la figure 8, une représentation d'une septième architecture d'amplification laser se rapportant à un amplificateur multipassage.

Cette architecture se compose de deux miroirs concaves et d'un miroir plan. Le signal est réfléchit à plusieurs reprises sur ces trois miroirs afin d'effectuer de multiples passage dans le cristal.

L'utilisation de la source forte brillance permet d'utiliser une lentille couplant la pompe dans le cristal de focale beaucoup plus longue qu'avec une pompe multimode. Par conséquent, l'angle d'attaque de la pompe avec le cristal s'en trouve plus fermé ce qui conduit à une longueur d'interaction pompe / signal accrue et la possibilité d'utiliser des matériaux amplificateurs longs (5mm-50mm).

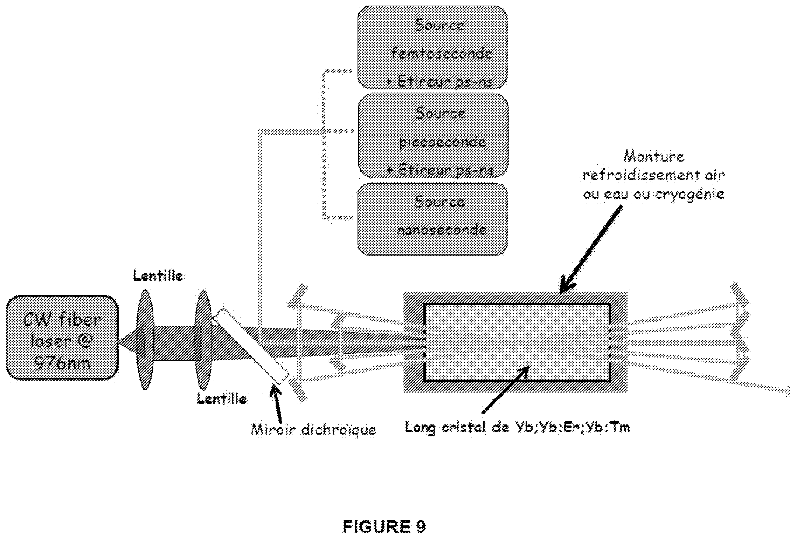

A la figure 9, une représentation d'une huitième architecture d'amplification laser se rapportant à un amplificateur multipassage. Il se compose de plusieurs miroirs concaves ou plans. Le signal est réfléchi tour à tour sur chacun des miroirs afin d'effectuer de multiples passage dans le cristal. L'utilisation de la source forte brillance permet d'utiliser une lentille couplant la pompe dans le cristal de focale beaucoup plus longue qu'avec une pompe multimode. Par conséquent, l'angle d'attaque de la pompe avec le cristal s'en trouve plus fermé ce qui conduit à une longueur d'interaction pompe / signal accrue et la possibilité d'utiliser des matériaux amplificateurs longs (5mm-50mm).

La présente invention offre également l'avantage de pouvoir améliorer les performances de telles architectures en termes de puissance moyenne, de brièveté de l'impulsion, d'énergie d'impulsion, en remplaçant les diodes lasers, à faible brillance, utilisées comme pompe optique, par la source optique du dispositif de pompage optique selon la présente invention.

De plus, l'invention apporte un meilleur recouvrement spatial entre la pompe et les faisceaux amplifiés sur une grande longueur, ainsi que la réduction des effets thermiques notamment pour les dispositifs de pompage optique comportant un élément en matériau amplificateur dopé Ytterbium.

A la figure 6, est représenté un amplificateur de puissance. Cet amplificateur est ajouté à la fin d'une chaîne d'amplification de puissance laser élevée. L'architecture proposée ici peut être utilisé soit en mode CW, ou encore en mode pulsé. Cet amplificateur met en oeuvre le dispositif de pompage optique selon la présente invention en utilisant notamment un cristal long (généralement de 1 à 15 cm, voire plus si nécessaire) de matériau dopé Yb comme par exemple l'Yb:CaF2 ou l'Yb verre ou tout autre type de matériau dopés Yb. La géométrie longue du cristal fait que la chaleur dégagé est répartie sur une plus longue distance que pour un cristal court classique. On notera d'ailleurs, qu'un avantage de la présente invention réside dans le fait qu'en travaillant à absorption constante à la longueur d'onde de pompe, de plus long cristaux nécessite des dopages en ions plus faibles que de courts cristaux, et que les matériaux ont alors une bien meilleur conductivité thermique à faible dopage. Ce qui est rappelé dans l'article « Thermomechanical properties of Yb3+ doped laser crystals: Experiments and modeling », paru dans le Journal of Applied Physics, Volume 108, 123108,

Dans cet amplificateur, un refroidissement par eau est suffisant même pour une puissance de sortie de plusieurs Watts. Bien sur, le refroidissement Peltier ou cryogénique peut être utilisé dans ce cas pour de plus grandes puissances de pompage.

Le pompage optique haute brillance selon la présente invention permet d'une part d'envisager des oscillateurs haute énergie par verrouillage de mode par effet Kerr puisque grâce à la pompe brillante, il est maintenant possible d'avoir l'intensité nécessaire à l'effet Kerr optique tout en utilisant des cristaux longs permettant un grand stockage d'énergie. Alternativement la pompe brillante peut être fortement focalisée dans des cristaux courts et générer des effets non linéaires extrêmement important élargissant le spectre des impulsions générée permettant d'accéder à des durées d'impulsions jamais encore réalisée avec des matériaux Yb.

En outre, on notera que la pompe fibrée utilisée revêt notamment deux aspects qui sont associés à sa qualité spatiale et à son M2 :
- la possibilité de focaliser le faisceau de pompe sur des tailles d'une centaine de micromètres avec des distances de Rayleigh grandes comparées aux autres sources de pompages et c'est notamment qui dans la solution selon l'invention permet d'utiliser des longs matériaux amplificateurs tout en conservant le bon recouvrement spatial pompe/signal + intensité de pompage élevée pour garantir forte densité d'inversion de population ;
- la possibilité de focaliser le faisceau pompe sur des tailles de l'ordre de 10 micromètres et moins et c'est cela qui permet d'envisager des oscillateurs ultra-courts Kerr-Lens sans SESAM en matériaux ytterbium

On notera de manière alternative, ainsi qu'il est évoqué dans le document de demande de brevet N° FR 09/05271, que la source optique à fibre émet un rayonnement monomode transverse contrôlé à une longueur d'onde inférieure à 1030 nm comprenant :
- au moins une diode laser apte à émettre une onde de pompe, et
- un tronçon de fibre optique amplificatrice gainée présentant deux extrémités, ladite fibre optique amplificatrice comportant un coeur et une gaine de pompage, la fibre étant dopée avec un dopant de terre rare,
- des moyens de couplage de ladite source de pompe dans la gaine de ladite fibre dopée,
caractérisée en ce que
▪ le coeur de la fibre dopée comprend une partie cylindrique dopée avec une terre rare choisie parmi l'Ytterbium, Néodyme, Thullium, pour obtenir un indice de réfraction du coeur supérieur à celui de la gaine ;
▪ la longueur d'onde d'excitation de ladite diode laser est comprise entre 750 nm et 960 nm ; et
▪ le diamètre de la gaine est supérieur à 50 micromètres et le rapport des surfaces entre le coeur dopé et la gaine de pompe est comprise entre 8 et 50.

Avantageusement, la section de ladite gaine présente un ratio grand axe/petit axe compris entre 1 et 1,4.

De préférence, le diamètre de ladite gaine est égal ou supérieur à 100 micromètres.

Selon une première variante préférée, la longueur d'onde d'émission est comprise entre 965 nm et 1010 nm, et la fibre est dopée Ytterbium.

Selon une deuxième variante, la longueur d'onde d'émission est comprise entre 880 nm et 960 nm, et la fibre est dopée Néodyme.

Selon différents modes de réalisation :
- la fibre comporte une gaine externe et une gaine interne, l'indice du matériau transparent de la gaine externe étant inférieur à celui de la gaine interne ;
- la gaine de la fibre est un guide d'onde ayant une ouverture numérique supérieure à 0,3 apte à réaliser le guidage de l'onde de pompe, le guide d'onde étant formé par une couronne de trous d'air.

Selon un mode de réalisation préféré, la fibre présente un filtrage spectral intégré, avec un profil en « W ».

Selon une autre variante, la fibre est incluse dans un barreau de silice pur pour former un élément rigide.

Selon un mode de mise en oeuvre préféré, le dispositif selon l'invention est opéré en configuration MOPA (acronyme de "Master Oscillator Power Amplifier") bâti autour d'une architecture à oscillateur amplifié comportant :
- une fibre dopée constituant l'amplificateur
- un laser source émettant dans la bande spectrale d'amplification de ladite fibre dopée,
- des moyens de couplage dudit laser source dans le coeur dopé de ladite fibre dopée, à au moins une extrémité de la fibre,
- une source de pompe émettant dans la bande spectrale d'absorption de la fibre amplicatrice,
- des moyens de couplage de ladite source de pompe dans la gaine de ladite fibre dopée,
ledit amplificateur comprenant des éléments sélectifs en longueur d'onde intra-cavité aptes à coopérer avec les moyens d'injection de sorte à filtrer sur la longueur d'onde donnée et également à réinjecter dans la fibre l'onde de pompe non absorbée après un passage dans la fibre.

Selon une variante avantageuse, ledit laser source est un laser à semiconducteur.

De préférence, les moyens de couplage se rapportent à un coupleur comprenant N fibres multimodes d'entrée susceptibles d'être soudées directement aux sorties fibrées de N diodes de pompage et une fibre de sortie susceptible d'être directement soudée à la fibre amplificatrice.

Selon une variante, ladite fibre dopée constitue une fibre amplificatrice, ladite source comprenant en outre:
- une source de pompe émettant dans la bande spectrale d'absorption de la fibre amplicatrice ;
- des moyens de couplage de ladite source de pompe dans la gaine de ladite fibre dopée ;
- un résonateur optique apte à réinjecter le faisceau laser issu du coeur dopé de ladite fibre aux deux extrémités de ladite fibre amplificatrice,

Le résonateur peut être défini par des miroirs sélectifs, des réseaux de Bragg en volume ou des réseaux de Bragg photo-inscrits dans le coeur de la fibre dopée ou une autre fibre compatible en géométrie.
Selon un autre mode de réalisation avantageux, ladite fibre dopée est constituée par
un coeur dopé entouré par une section tubulaire d'indice inférieur à l'indice du coeur dopé et de la gaine, l'indice variant radialement d'un indice maximum au centre, à
un indice minimum au niveau de ladite section tubulaire, et un indice intermédiaire au niveau de la gaine.

Avantageusement, ladite fibre dopée est une fibre à maintien de polarisation.

Selon un mode de réalisation avantageux, la fibre dopée présente une biréfringence supérieure à 5.10⁻⁵.

Selon une variante, la fibre dopée comprend une gaine présentant des zones longitudinales dopées d'un premier type de dopage et des zones longitudinales dopées d'un second type de dopage.

Selon une autre variante, ladite fibre dopée comprend un coeur portant au moins un réseau de Bragg inscrit par photogravure, avec un spectre de transmission déterminé pour filtrer les émissions en-dehors de la bande spectrale d'émission souhaitée.

Selon une alternative, la fibre dopée est divisée en deux tronçons au moins séparés par au moins un filtre dont le spectre de transmission est déterminé pour filtrer les émissions en-dehors de la bande spectrale d'émission souhaitée.

Selon une autre alternative, la fibre dopée est divisée en deux tronçons au moins, séparés par au moins un isolateur optique limitant les oscillations laser parasites en dehors de la bande d'émission souhaitée.

Selon premier mode de mise en oeuvre, la source optique émet en continu.

Selon une deuxième variante, elle émet en mode impulsionnel avec des durées d'impulsion comprises entre 100 femtosecondes et une microseconde.

L'invention concerne également un procédé de fabrication d'une fibre dopée destinée à une source caractérisé en ce que l'on assemble dans une préforme un élément central dopé avec une terre rare pour la formation du coeur de la fibre, et au moins six éléments périphériques dopés avec un premier dopant pour une partie d'entre eux, et un deuxième dopant pour certains d'entre eux, entourant ledit coeur, pour la formation de la gaine de la fibre.

Avantageusement, lesdits éléments périphériques dopés sont du bore pour une partie d'entre eux et de la silice pour une partie d'entre eux.

La figure 1 représente une vue en coupe d'une fibre selon un mode de réalisation de l'invention. La fibre est une fibre « air-clad » avec un diamètre extérieur de 200 µm, un diamètre de gaine de 80 µm et un diamètre de coeur de 20 µm. Le coeur de la fibre est constitué d'un zone cylindrique avec une indice de réfraction supérieur à celui de la gaine. Ce coeur est dopé sur tout son volume avec l'élément terre rare Yb, ainsi qu'avec un ou plusieurs co-dopants choisi parmi P, Ce, Al, Ge. Le guide multi-mode est défini par l'air-clad.

Dans le cas idéal, cette fibre présenterait un diamètre de coeur d'environ 25 µm et un diamètre de gaine d'environ 100 µm (ratio de surface entre la gaine et le coeur. Un diamètre de coeur entre 10 et 30 µm est acceptable pour l'application. De préférence, le ratio de surface entre la gaine et le coeur de la fibre sera 8 et 25 pour une opération laser efficace à 976 nm. Il apparaît qu'au-delà d'un ratio de 50 le rayon laser à 976 nm est difficilement observable.

Le coeur d'une ouverture numérique de 0,06, est faiblement multi-mode à 976 nm. La surface de la gaine de pompe est environ 10 fois plus importante que celle décrite dans le document Yllä Jarkko et al, « A 3.5 W 977nm jacketed air clad fiber laser ytterbium doped fiber laser », OSA Trends in Optics and Photonics, Advanced Solid State Lasers Vol. 34, 2000).

Elle permet l'injection de plusieurs dizaines de Watts de pompe. Les performances laser à 976 nm présentent une puissance de sortie de 10W à 976 nm et un très faible niveau d'ASE à 1030 nm. Cette puissance, limitée seulement par la puissance de pompe disponible, est trois fois supérieure au record précédent dans une fibre souple. L'efficacité du système (30%) est limitée par le taux de couplage de la pompe dans l'air-clad (l'ouverture numérique de l'air-clad était de 0,4, mais une ouverture numérique supérieur à 0,6 est envisageable).
Compte tenu du niveau de brillance des diodes actuelles, il est envisageable d'injecter plus de 100W dans une telle fibre, ce qui donne une puissance de sortie supérieure à 50W à 976 nm pour un rendement raisonnable de 50%.

Une telle fibre permet en premier lieu d'améliorer la qualité spatiale en sortie.

La qualité spatiale d'un mode optique est définie par le paramètre M2, où M2=1 correspond à un mode parfaitement gaussien à la limite de diffraction. Le paramètre M2 en sortie est mesuré pour un laser conforme à l'invention est de 1,17 pour une fibre roulée autour d'un mandrin de diamètre 210 mm. Malgré le caractère multi-mode de la fibre, le laser oscille naturellement sur le mode fondamental, aidé par la légère courbure qui crée des pertes différentielles accrues sur les modes d'ordre supérieur.

Une telle fibre permet également d'améliorer la qualité spectrale. Une cavité laser définie par de simples miroirs ne présente pas de sélection spectrale. L'émission laser se présente alors sous la forme d'une multitude de lignes autour du maximum du gain à 976 nm (free running laser).

Il est clair que le spectre optique n'est pas compatible avec la largeur d'acceptance spectrale des cristaux de type PPLN nécessaire pour le doublage en fréquence des sources lasers continus. Pour mieux adapter le spectre aux contraintes de doublage, il est possible d'utiliser des éléments filtrants avec une faible largeur spectrale, tel qu'un VBG (volume Bragg grating) en coupleur de sortie.

Ainsi, il est possible de définir une raie spectrale d'environ 100 pm, ce qui est alors compatible avec le doublage dans des cristaux PPLN de plusieurs dizaines de mm. Néanmoins le fort gain qui existe dans la bande spectrale 975-980 nm peut entrainer une oscillation multi-raies parasites, provoquée par des réflexions résiduelles intra-cavité cavité, ou dans des pics de réflexion secondaire dans le VBG.

Il existe un moyen sûr d'éviter toute oscillation parasite dans le système. L'opération du système en configuration MOPA (Master Oscillator Power Amplifier), nous permet de définir un système qui minimise chaque réflexion. Dans ce cas, un laser d'une puissance relativement faible (Master Oscillator) est amplifié par la suite dans un étage d'amplification fibré (Power Amplifier). Le fort gain de la fibre assure une efficacité optique similaire à une configuration laser. L'avantage majeur de ce système est la possibilité de découpler les besoins de puissance et de qualité spectrale. On peut choisir un laser avec des caractéristiques compatibles avec l'application finale, qui sera tout simplement amplifié par la fibre, tout en gardant ces mêmes caractéristiques. Le spectre en sortie d'un système MOPA. Le taux d'extinction du spectre est supérieur à 15 dB, ce qui est une nette amélioration du taux d'extinction par rapport au cas laser mesuré à 7 dB.

Si le laser « maitre » choisi est spatialement monomode, il est possible d'exciter d'avantage le mode fondamental dans le fibre amplificatrice, ce qui peut donner une qualité spatiale supérieure au laser équivalent.

Le laser « maitre » peut être un laser à fibre ou une diode laser. Aujourd'hui il existe des diodes lasers qui ont des caractéristiques de puissance, spectre et polarisation qui sont parfaitement adaptés à cette fonction :
- Spatialement monomode et couplé dans une fibre,
- Polarisé,
- Puissance jusqu'à 400 mW ex fibre,
- Largueur spectral inférieur à 0.1 nm.

L'amplification directe d'un tel laser dans une fibre double gaine peut donner des puissances supérieures à plusieurs centaines de Watts.

Le laser maître peut également être un laser à fibre de faible puissance (exemple < 5W). Plusieurs étages d'amplification peuvent être utilisées pour atteindre des très fortes puissances moyennes.

Finalement le laser maître peut être un laser impulsionnel (femtoseconde, picoseconde ou nanoseconde). Dans ce cas il est très souvent plus facile de définir les caractéristiques temporelles du laser à faible puissance avant d'amplifier les impulsions dans un amplificateur de puissance. Nous avons constaté que dans le cas d'un laser à 976 nm en mode déclenché (Q-switch) il est préférable de construire une cavité laser à faible puissance afin de contrôler :
- la durée des impulsions,
- l'impact de l'émission spontanée amplifiée (ASE) qui se construit entre chaque émission d'impulsions,
- La pureté spectrale des impulsions.

Ces impulsions bien contrôlées seront ensuite amplifiées dans une fibre amplificatrice, permettant d'atteindre de très hautes puissances moyennes (5-100 W) en conservant leurs qualités spectrales, spatiales et temporelles initiales.

Le dispositif laser atteint des performances avantageuses en termes de durée d'impulsions, d'énergie, de puissance moyenne et de puissance crête.

Les impulsions émises par un oscillateur maitre Q-switché se caractérisent par une durée de 12 ns pour un taux de répétition ajustable dans une gamme 10-400 kHz. La largeur spectrale de la source maître est fixée par un composant filtrant intra-cavité (VBG) à 125 pm. Les performances atteintes avec un exemple de réalisation sont les suivantes :
- Puissance moyenne max : 78 W
- Energie max : ∼1 mJ
- Puissance crête max >100 kW

Après doublage en fréquence à 488 nm dans un cristal non linéaire de LBO, l'obtention de 16.1 W de puissance laser émise dans le bleu a été démontrée pour une puissance IR de 44 W. Rappelons que le précédent record, datant de 2006 rapportait l'émission de 83 mW dans le bleu (A. Bouchier, G. Lucas-Leclin, P. Georges, and J. Maillard, "Frequency doubling of an efficient continuous wave single-mode Yb-doped fiber laser at 978 nm in a periodically-poled MgO:LiNbO3 waveguide," Opt. Express 13, 6974-6979 (2005)).

Cette performance constitue donc un record en terme de rayonnement monomode dans les bandes spectrales considérées (IR et visible) tant au niveau de la puissance moyenne qu'au niveau de l'énergie par impulsions.

### Fibres à maintien de polarisation

L'efficacité du doublage de fréquence pour atteindre une émission dans le bleu (488 nm) est maximisée si le rayonnement à 976 nm est entièrement polarisé Pour ce faire, il est nécessaire que la fibre amplificatrice assure le maintien de la polarisation du rayonnement. Avec les contraintes géométriques (faible ratio de surface coeur/gaine) il est raisonnable de se demander comment nous pouvons réaliser cette fonction - une structure classique en maintien de polarisation (fibre PANDA ou bow-tie) serait impossible à mettre en oeuvre à cause de la place limitée autour du coeur.

Plusieurs géométries spécifiques sont envisageables :
- Fibre à coeur elliptique : Un coeur non-circulaire a la propriété d'être intrinsèquement biréfringent, avec l'avantage de ne pas imposer des contraintes sur les dimensions de la gaine. Pour définir un coeur elliptique (ou toute autre forme allongée) nous précisons un rapport de longueur entre le grand axe et le petit d'au moins 1,1 :1 ;
- Fibres fabriquées par assemblage de plusieurs éléments dans une préforme avant fibrage.

Cette géométrie particulière permet d'augmenter le volume de silice dopé avec du Bore (élément qui impose les contraintes mécaniques responsables de la biréfringence) par l'utilisation de plusieurs barreaux, sans trop augmenter le diamètre de la gaine.

On introduit dans la préforme un élément central dopé Ytterbium entouré d'éléments dopés Bore et d'éléments dopés Néodyme. Dans l'exemple décrit, les éléments sont disposés radialement, par paires adjacentes d'éléments de même type de dopage.

Il est également possible, dans certaines configurations, que cette fibre puisse avoir une fonction de fibre polarisante - dans ce cas, au lieu d'introduire une forte différence entre les indices effectifs des deux polarisations (fibre à maintien de polarisation), l'enroulement de la fibre avec un rayon de courbure spécifique et aligné selon l'axe des éléments dopés Bore peut augmenter les pertes de propagation pour un des deux axes de polarisation. Ceci est particulièrement intéressant en mode laser où il est nécessaire de discriminer entre les deux états de polarisation afin d'émettre un rayon polarisé.

Une telle fibre présente avec une biréfringence mesurée supérieure à 10⁻⁴.

### Inscription de réseaux de Bragg inclinés

Les réseaux de Bragg incliné (« tilted Bragg gratings ») peuvent introduire des pertes lors de la propagation sur un des deux axes de polarisation. Ces réseaux peuvent être utilisés pour transformer une fibre normale en fibre à maintien de polarisation et pour transformer une fibre à maintien de polarisation en fibre polarisante. Il s'agit de l'inscription de plusieurs réseaux tout au long de la fibre dopée Yb. Ce dispositif peut également jouer un rôle de filtrage.

### Filtrage de l'ASE autour de 1030 nm

Les cavités lasers décrites sont limitées car elles nécessitent de filtrer sévèrement l'ASE autour de 1030 nm et ceci en dehors de la fibre dopée (élément filtrant inséré dans la cavité à la sortie de la fibre). Le filtrage extérieur étant difficilement réalisable au-dessus de 60 dB, cette contrainte limite fortement la longueur de la fibre (et l'efficacité du laser) pratiquement utilisable. Une façon élégante de contourner cette contrainte est d'introduire des moyens de filtrage de ce rayonnement parasite tout au long de la fibre amplificatrice. Ceci est possible avec de nombreux dispositifs.

### Fibre amplificatrice avec profil d'indice en « W »

L'utilisation d'une gaine « enterrée » autour du coeur dopé permet d'introduire une forte variation de l'indice effectif du mode fondamental en fonction de la longueur d'onde.

Dans ce cas un anneau d'un faible indice de réfraction (plus faible qui celui de la gaine) est placé autour du coeur dopé - cet anneau est le plus souvent constitué de silice co-dopé avec du fluor.

Pour un certain rayon de courbure de la fibre nous pouvons introduire des pertes supplémentaires pour le mode autour de 1030 nm sans impacter le mode laser à 976 nm. Ceci permet de relâcher les contraintes sur la longueur de la fibre car le gain à 1030 nm est compensé par les pertes de guidage.

Cette géométrie de fibrage est évidemment plus compliquée à mettre en oeuvre et peut imposer certaines contraintes supplémentaires sur la géométrie de la fibre.

D'autres méthodes de filtrage sont également possibles dans le cas ou ces contraintes ne sont pas compatibles avec les caractéristiques lasers souhaités :

### Inscription de réseaux de Bragg à plusieurs endroits

### au long de la fibre amplificatrice

Il existe deux types de réseau de Bragg qui sont susceptibles de jouer un rôle de filtrage d'ASE, les LPG (long period gratings) et les TFBG (tilted fibre Bragg gratings, ou réseaux de Bragg inclinés) :
Les LPG fonctionne par le couplage sélectif de certaines longueurs d'onde vers les modes de gaine. La lumière est expulsée du coeur monomode vers la gaine où la lumière est co-propageante mais ne reçoit que peu de gain optique grâce à son faible recouvrement avec le coeur dopé. Il est possible d'introduire des pertes supérieures à 10 dB sur une largeur spectrale de plusieurs dizaines de nanomètres.

Les TFBG ont une action similaire mais la lumière expulsée dans la gaine est en général retro-réfléchie. Ces réseaux sont également sensibles à la polarisation et, comme cité ci-dessus, pourraient rendre la fibre polarisante pour la longueur d'onde du signal. Pour les longueurs d'onde parasites, deux réseaux peuvent être inscrits pour introduire des pertes pour chaque polarisation.

Pour les deux types de réseaux, plusieurs inscriptions peuvent être effectuées tout au long de la fibre afin d'augmenter le taux de réjection du rayonnement parasite.

### Opération avec deux ou plusieurs étages d'amplification

Les méthodes de filtrage citées ci-dessus nécessitent une architecture spécifique de la fibre dopée ou une modification de la fibre par l'introduction de filtres photo-inscrits. Une dernière méthode de filtrage est envisageable qui ne demande aucune modification de la fibre dopée.

Pour le cas MOPA, est également valable pour le cas laser. Il s'agit de la séparation en deux ou plusieurs morceaux de la fibre amplificatrice associée à un recyclage de la pompe sur chaque tronçon. Le signal issu de chaque tronçon est injecté dans le tronçon suivant (4 miroirs qui définissent le chemin de la lumière à 920 nm, où au moins le premier est un miroir dichroïque qui sépare le signal à 976 nm et la pompe à 920 nm). La pompe est réinjectée dans le tronçon suivant afin de ne pas réduire l'efficacité de l'ensemble. On peut aussi imaginer d'avoir des étages indépendants où la pompe de chaque étage est recyclée dans lui-même. Entre chaque étage, l'onde à 976 nm ainsi que l'ASE à 1030 nm passent dans un filtre optique qui laisse passer l'onde à 976 mais qui atténue l'ASE à 1030 nm. Un isolateur optique est également utilisé (seulement dans le cas MOPA) pour atténuer l'ASE à 976 nm qui est contra propageante et qui peut capter une portion significative de la puissance laser.

Cette configuration permet d'utiliser une longueur totale de fibre supérieure par rapport à une configuration simple étape. Elle est également compatible avec un système tout intégré où un coupleur multi-mode est utilisé en sens inverse pour séparer la pompe et le signal après la première étape et un deuxième coupleur est utilisé pour combiner pompe et signal dans la deuxième étape d'amplification.

### Autres modes opératoires

Le concept d'amplification à 976 nm dans les fibres spéciales peut aussi être appliqué dans une configuration de source d'ASE où le système est constitué d'une fibre amplificatrice pompée d'un côté, d'un système de filtrage spectral et d'un miroir 100 % à 976 nm ainsi que d'un système de réinjection de la pompe. Cette source produit un rayonnement continu à 976 nm de quelques nm de largeur, non polarisé et spatialement monomode.

L'architecture MOPA peut aussi être déclinée pour générer des impulsions ultracourtes à 976 nm. En effet le Master Oscillateur peut être opéré en régime de blocage de mode pour produire des impulsions dans la gamme temporelle 100 fs⁻¹ ps. Ces impulsions sont ensuite amplifiées soit directement dans la fibre du Power Amplifier soit selon la technique d'amplification à dérive de fréquence en l'étirant temporellement avant l'amplification, avant remise en phase des composantes spectrales dans un élément dispersif de dispersion opposée à l'étireur (compresseur).

L'invention comprend également des modes de réalisation tout-intégrés. Dans ces modes de réalisation, le couplage intégré peut s'appliquer à une configuration laser ou bien à une configuration MOPA. Ainsi, la source optique selon l'invention qui comprend :
- N diodes laser multimodes 100/125 µm, ON=0.15,
- un coupleur de pompe tout fibré N vers 1 ;
- un réseau de Réseau de Bragg photo-inscrit dans le coeur dopé de la fibre amplificatrice de réflectivité maximale (100%) à 977 nm ;
- une fibre double gaine microstructurée 20/80 à gaine d'air dopée aux ions ytterbium ;
- un réseau de Bragg photo-inscrit dans le coeur dopé de la fibre amplificatrice de réflectivité 10% 977 nm ;
- un connecteur SMA haute puissance poli en angle.

Ainsi, dans ce mode de réalisation, les moyens de couplage se rapportent à un coupleur comprenant N fibres multimodes d'entrée susceptibles d'être soudées directement aux sorties fibrées de N diodes de pompage et une fibre de sortie susceptible d'être directement soudée à la fibre amplificatrice.

De même, dans un mode de réalisation selon l'invention en configuration MOPA haute puissance à 977 nm tout intégré qui comprend :
- un connecteur SMA haute puissance poli en angle ;
- N diodes laser multimodes (100/125 µm ON=0.15) ;
- Un combineur de pompes tout-fibré pourvu de N entrées multimodes et de une sortie signal monomode à 977 nm ;
- Une fibre double gaine microstructurée 20/80 à gaine d'air dopée aux ions ytterbium ;
- Un suppresseur de mode de gaine et un adaptateur de modes ; cet adaptateur est de préférence un adaptateur de modes 20 vers 6 ;
- Un isolateur fibré à 977 nm ;
- Une diode laser monomode de haute finesse spectrale à 977 nm.

Dans un autre exemple en référence à la demande de brevet N°FR08/55879, mettant en oeuvre une fibre selon l'invention mis en oeuvre dans un dispositif comprenant :
- une diode laser ;
- une fibre optique amplificatrice ;
- des moyens de couplage ;
- un résonateur incluant des éléments sélectifs en longueur d'onde.

La diode laser utilisée est une source de pompage multimode transverse à environ 915 nm, dont la puissance est de 230W, dont le rayonnement émis est délivré par une fibre optique de diamètre de 400 µm et une ouverture numérique NA=0,22.

La lentille présentant une ouverture numérique de 0.5 et une focale de 8 mm et le miroir dichroïque est totalement réfléchissant à la longueur d'onde de pompage à environ 915 nm.

Les moyens de couplage de l'onde de pompe dans la gaine de la fibre dopée comprennent deux lentilles de focales respectives 18 mm et 8 mm et un miroir dichroïque transparent à la longueur d'onde de pompe et réfléchissant à la longueur d'onde laser.

Les optiques sélectives se rapportent à deux miroirs dichroïques.
La fibre optique est une fibre à cristal photonique appelée aussi en langue anglaise «rod-type photonic crystal fibres ». Cette fibre est d'une longueur réduite qui n'excède pas 1,23 m.

Les fibres photoniques ne sont pas, comme les fibres classiques, entièrement constituées d'un matériau solide transparent comme la silice dopée; en section, une fibre photonique présente un réseau de trous d'air.

Ces trous sont parallèles à l'axe de la fibre, et s'étendent longitudinalement le long de la fibre. Pratiquement, ces trous peuvent être obtenus en fabriquant la préforme par assemblage de tubes capillaires ou de cylindres de silice, en respectant le motif des trous à obtenir dans la fibre. L'étirage d'une telle préforme fournit une fibre avec des trous correspondant aux tubes capillaires.

La présence de ces trous dans le matériau de la fibre crée des variations d'indice moyen du matériau. Ces variations de l'indice peuvent, comme dans une fibre optique classique, être utilisées pour le guidage par réflexion totale interne de signaux lumineux à des longueurs d'onde adaptées.

Cette fibre est un élément constitutif du dispositif qui permet de mettre en oeuvre un laser à fibre de haute puissance à trois niveaux d'énergie.

On peut noter que ce type de laser à fibre est plus compact, plus stable et n'a pas besoin de mode de refroidissement comparé aux technologies semi conducteurs.

Il a également une meilleure qualité de faisceau, la qualité du faisceau étant imposé par les propriétés de guidage de la fibre, Il a donc une meilleure résolution pour des applications de marquage.

Cette fibre optique est dopée avec un ion de terre rare qui est dans ce mode de réalisation principalement l'ytterbium. C'est donc une fibre optique dopée ytterbium (Yb) ultra large coeur de type barreau (autrement appelé en anglais « rod-type fiber »).

L'ytterbium appartient à la catégorie des ions de terres rares ou des ions métalliques qui sont couramment utilisés pour réaliser des sources laser. Parmi tous les ions utilisables, seuls ces ions ytterbium, qui font partie des ions terre rares, ont une transition vers 976 nm.

On notera que pour la fibre utilisée le ratio des surfaces coeur/gaine, est sensiblement de 6,5.

Dans une autre mode de réalisation, ce ratio est compris entre 5 et 100.

Les spectres d'absorption et d'émission des ions Yb³⁺ dans la silice, les matériaux dopés par des ions Yb³⁺ présentent une section efficace d'émission très importante vers 976 nm, associée à une bande d'absorption vers 915 nm.

La section efficace d'absorption de l'ytterbium dans les verres est largement plus importante que la section efficace d'émission.

Selon la matrice cristalline ou amorphe utilisée, les sections efficaces d'émission vers 976 nm et d'absorption vers 915 nm sont plus ou moins élevées. Avec une bande d'absorption d'une dizaine de nanomètres de largeur à mi-hauteur vers 915 nm, le pompage par diode pourra être envisagé. Néanmoins, cette forte émission autour de 976 nm est accompagnée d'une absorption toute aussi intense.

Le pompage s'effectue entre le sous-niveau le plus bas du multiplet ²F7/2 et le sous-niveau le plus haut du multiplet ³F5/2. L'émission a lieu entre le sous-niveau le plus bas du multiplet ³F5/2 et le sous-niveau le plus bas du multiplet ²F7/2.
On obtient donc une vraie transition à trois niveaux, qui impose des contraintes importantes sur le pompage de ces matériaux afin d'obtenir l'émission autour de 976 nm.

Le matériau dopé par des ions ytterbium absorbe tout rayonnement autour de 976 nm en l'absence de pompage. Pour obtenir une émission vers 976 nm, le pompage du matériau devra être suffisamment intense pour réaliser l'inversion de population de transparence à la longueur d'onde laser 976 nm dans le milieu dopé. En d'autres termes, Il faut donc que l'intensité de pompage autour de 915 nm soit suffisante pour atteindre la transparence du milieu dopé vers 976 nm. Cette intensité, correspondant à l'annulation de l'absorption à la longueur d'onde laser 976 nm dans le matériau, est appelée intensité de transparence.

L'utilisation de cette fibre en silice dopée par des ions Yb³⁺ permet de confiner la pompe dans le milieu dopé, et d'atteindre facilement l'intensité de transparence sur la longueur de ce milieu dopé. Cette fibre garantit donc une forte interaction du faisceau de pompe avec l'ion dopant, sur une grande longueur grâce au confinement de la lumière dans la gaine de pompage de la fibre.

Cette fibre dopée à l'ytterbium utilisée pour cette transition est une fibre monomode transverse présentant des dimensions record (diamètre de 80 µm) pour une fibre monomode. Des dimensions aussi extrêmes du coeur dopé sont rendues possibles par le réseau de très petits trous d'air (d'un diamètre inférieur à 100nm) diminuant l'indice moyen de la gaine entourant le coeur dopé et permettant d'obtenir une ouverture numérique de coeur de l'ordre de 0.01.

Le signal à sensiblement 977 nm se propage dans le coeur dopé de diamètre de 80 µm et la pompe à sensiblement 915 nm se propage à l'intérieur de la gaine optique d'un diamètre de 200 µm avec une grande ouverture numérique supérieure à 0,7. Cette gaine est définie par une microstructure remplie d'air.

Cette microstructure comporte des trous beaucoup plus gros que ceux définissant le coeur (>2µm) suivant un motif qui préserve la symétrie de la fibre autour de son axe longitudinal.

On précise que les dimensions des trous définissant respectivement le coeur et la gaine de la fibre peuvent être ajustés en fonction des caractéristiques de guidage désirées : diamètre de coeur, ouverture numérique de la gaine ou du coeur.

Dans la configuration de pompage par la gaine optique, cette fibre présente une absorption de pompe d'une valeur de 10 dB/m à 915nm.

Elle permet, grâce à un recouvrement pompe-coeur dopé très efficace d'absorber 230W de pompe sur des longueurs très courtes de 123cm. Sur une telle longueur, l'intensité de pompage reste uniformément le long de la fibre inférieure à l'intensité de transparence et le gain parasite dans la bande spectrale 1010 nm - 1100 nm suffisamment faible pour être compensé par l'ensemble des éléments sélectifs en longueur d'onde.

Dans ce dispositif, la diode laser émet un rayonnement à une longueur d'onde comprise entre 910 et 940 nm.

Dans une configuration particulière, la diode laser de pompe utilisée délivre des puissances de 10W à 1000W, le faisceau de pompe peut être délivré directement en espace libre, ou être couplée à une fibre multimode, présentant des diamètres de 50 à 800µm.

La lumière issue de la diode de pompe est couplée à une fibre de transport puis injectée dans la fibre amplificatrice grâce à des moyens optiques. Ces moyens de couplage comprennent dans cette configuration particulière deux lentilles.

Les moyens optiques sont conçus de façon à coupler la lumière issue de la fibre de transport dans la fibre laser. En particulier ces moyens optiques présentent un grandissement qui permet à l'image du coeur de la fibre de transport de la pompe en sortie de diode laser d'avoir une dimension sensiblement égale ou inférieure au diamètre de la gaine de pompe de la fibre laser.

De même ces moyens optiques ont une ouverture numérique égale ou supérieure au produit ON₁/G où G est le grandissement du système optique et ON₁ est l'ouverture numérique de la fibre de transport.

Par exemple si on considère la diode multimode à 915 nm couplée dans une fibre de diamètre 400µm et d'ouverture numérique 0.22, et la fibre laser dont la gaine de pompage a un diamètre de 200 µm et une ouverture numérique de 0.7, les moyens optiques doivent présenter un grandissement G ≤ 200/400=0,5 et une ouverture numérique image d'au moins 0.5. Dans l'exemple présenté ici, les moyens optiques sont composés d'un couple de deux lentilles asphériques : une première lentille de focale 18 mm et une deuxième lentille de focale 8 mm.

La lentille de 8mm à une ouverture numérique de 0.5.

Dans une configuration particulière, ces deux lentilles peuvent être des microlentilles, cylindriques, elliptiques, ou hyperboliques, ou des condenseurs asphériques.

Dans une autre configuration, les moyens de couplage peuvent être :
- Un coupleur comprenant N fibres multimodes d'entrée susceptibles d'être soudées directement aux sorties fibrées de N diodes de pompage et une fibre de sortie susceptible d'être directement soudée à la fibre amplificatrice à large coeur ;
- Une fibre optique à large mode dont la section transverse est progressivement amincie de manière à adopter une structure en entonnoir. Cette fibre a une extrémité ayant le même diamètre que la fibre délivrant l'onde de pompe et l'autre extrémité ayant le diamètre de la gaine de la fibre amplificatrice.

Dans le cas où les moyens de couplage se rapportent à un tronçon de fibre, les deux extrémités de cette fibre « en entonnoir » sont alors soudées respectivement en sortie de la fibre de transport de la diode et en entrée de la fibre amplificatrice à gros coeur dopé.

La fibre présente une géométrie qui permet une propagation monomode dans le coeur et multimode dans la gaine de pompage. Le rapport entre les diamètres du coeur et de la gaine de pompe est inférieur à 10. Dans cette configuration particulière, la fibre monomode transverse présente des dimensions importante avec un diamètre du coeur dopé de 80 µm. De telles dimensions du coeur dopé sont rendues possibles par le réseau de très petits trous d'air (<100nm de diamètre) diminuant l'indice moyen de la gaine et permettant d'obtenir une ouverture numérique de coeur de l'ordre de 0.01.

Le signal à sensiblement 977 nm se propage dans le coeur dopé de diamètre de 80 µm et la pompe à sensiblement 915 nm se propage à l'intérieur de la gaine optique d'un diamètre de 200 µm avec une grande ouverture numérique supérieure à 0,7.

Cette gaine est définie par une microstructure remplie d'air. Cette microstructure comporte des trous beaucoup plus gros que ceux définissant le coeur (>2µm) suivant un motif qui préserve la symétrie de la fibre autour de son axe longitudinal.

Pour des puissances plus faibles, il est possible d'utiliser des coeurs plus petits. Le rapport entre les surfaces transverses du coeur dopé de la fibre et de la gaine de pompe doit rester dans l'intervalle 5-100 et préférentiellement plus proche de 5. La gaine de la fibre peut présenter un diamètre de gaine de guidage de la pompe entre 50 et 400 µm.

La fibre amplificatrice présente une propagation monomode du faisceau dans le coeur dopé à la longueur d'onde de sensiblement 977 nm.

La fibre est intrinsèquement à maintien de polarisation ou simplement maintenue dans une position fixe. Le coeur de la fibre peut contenir en plus des ions dopants de terres rares une ou plusieurs des espèces chimiques suivantes : Germanium, Phosphore, Bore, Fluor.

Le coeur dopé de la fibre présente un diamètre supérieur à 12 µm. Il s'agit donc d'une fibre à large aire modale ou fibre LMA (Large Mode Area).

La fibre à large mode peut être une fibre micro-structurée air silice, rigide ou souple. La longueur de la fibre est choisie de façon à ce que l'intensité de pompage en sortie de fibre soit supérieure à l'intensité de transparence en sortie de fibre et à ce que le gain indésirable dans la bande 1010 nm - 1100nm soit maintenu inférieur à 60dB.

Dans ce mode de réalisation, pour 230W de pompe injectée, on mesure 63W de puissance de pompage résiduelle après une longueur de propagation de 123cm, pour une puissance de transparence calculée de 11W. Cette puissance correspond à des intensités de transparence de 30kW/cm2 et une section transverse de la gaine de pompage de 31500µm.

Dans ce mode de réalisation, le gain à 1030nm est sensiblement de 50 dB.

L'onde de pompe résiduelle en sortie de la gaine de pompage ainsi que l'onde laser sortant du coeur de la fibre amplificatrice sont alors collimatées par un moyen optique.

L'onde laser est réfléchie par le miroir, totalement réfléchissant à la longeur d'onde laser de sensiblement 977 nm alors que l'onde de pompe à sensiblement 915 nm n'est pas réfléchie. Cette pompe résiduelle est alors incidente sur un miroir fortement réfléchissant la longueur d'onde de pompe de 915 nm dans ce mode de réalisation.

La position de ce miroir est calculée afin que le faisceau de pompe réfléchi par le miroir soit exactement ré-injecté dans la gaine de pompe de la fibre laser. Pour un miroir plan cette position correspond à celle de l'image de la face de sortie de la fibre laser à travers le moyen optique.

L'onde de pompe effectue alors un second voyage dans la fibre laser, ce qui augmente l'absorption de la pompe, et augmente l'inversion de population, ainsi que l'efficacité du laser.

Dans une autre configuration, ce moyen de recyclage de la pompe peut être un réseau de Bragg photo-inscrit dans le coeur de la fibre, ou un réseau de Bragg massif en espace libre, ou un prisme, ou un réseau.

Un miroir dichroique est placé entre les deux moyens optiques. Ce miroir dichroïque est totalement réfléchissant autour de 977 nm et totalement transparent à la longueur d'onde de pompe.

Un second miroir totalement réfléchissant autour de 977 nm est placé sur la trajectoire du faisceau laser afin de former un résonateur avec la face de la fibre opposée à la pompe.

Dans une autre configuration, le résonateur correspond à des miroirs à haute réflectivité (HR) ou de réflectivité fini à la longueur d'onde de sensiblement 977nm.

Les dispositifs de réinjection aux extrémités de la fibre peuvent être des réseaux de Bragg photo-inscrits directement dans le coeur dopé de la fibre réfléchissant à la longueur d'onde de sensiblement 977 nm, ou des tronçons de fibre non dopés avec un réseaux de Bragg réfléchissant à la longueur d'onde de sensiblement 977 nm inscrits dans le coeur, ces tronçons de fibres étant soudés à la fibre amplificatrice. Les dispositifs de réinjection aux extrémités de la fibre peuvent être des réseaux de Bragg massifs.

Un ou plusieurs des éléments constituant le résonateur peuvent être sélectifs en longueur d'onde, c'est-à-dire réfléchissant à la longueur d'onde de sensiblement 977nm et de très faible réflectivité dans la bande (1010 nm - 1100 nm).

L'ensemble des éléments optiques comprend le miroir totalement transparent à la longueur d'onde laser 977 nm et présentant une réflectivité >99% dans la bande 1010 nm - 1100 nm, et le miroir de fond de cavité qui présente une transmission >99% dans la bande 1010 nm - 1100 nm.

Au total, cet ensemble inflige des pertes suffisantes dans la bande 1010 nm - 1100 nm pour que le laser oscille spontanément autour de 977 nm.

Dans une autre configuration, le moyen d'exercer une sélection en longueur d'onde se rapporte à :
- un ou plusieurs miroirs dichroïques aptes à réfléchir un signal d'une longueur d'onde définie ;
- un ou plusieurs filtres absorbant ou interférométrique ;
- une courbure particulière de la fibre amplificatrice ;
- un élément dopant ajouté dans la constitution du coeur de la fibre absorbant dans la bande 1010 nm- 1100 nm, ou
- un réseau de Bragg photo-inscrit dans le coeur de la fibre ou un réseau de Bragg massif extérieur à la fibre ;
- un prisme ou un réseau.

Ce dispositif permet donc de générer un laser de puissance aux alentours de 976 nm permettant d'atteindre aisément des puissances de l'ordre de plusieurs centaines de watts, contre 10W dans l'état de la technique, avec une qualité de faisceau excellente.

Le laser délivré est un faisceau monomode transverse aux alentours de 976nm qui est très puissant.

Le dispositif, par la combinaison :
- d'une fibre dopée Yb ultra large coeur de type barreau,
- d'optiques spectralement sélectives permettant d'éliminer les effets lasers parasites sur les longueurs d'ondes non désirées, et
- d'une optique permettant de recycler la pompe non absorbée,
permet de produire ces niveaux de puissances de plus de 100W, voire 1kW à 977nm. Suivant la puissance de la diode de pompe à sensiblement 915 nm, la puissance du laser à sensiblement 977 nm de haute puissance à trois niveaux d'énergie en fonction de la puissance de pompe à sensiblement 915 nm.

Le seuil laser est atteint à la valeur de puissance de pompe de la diode de 18W à 915nm. Au maximum de la puissance de pompe disponible, à 230W, le laser produit une puissance allant jusqu'à 94 W à 977 nm.

La pente d'efficacité du laser entre la puissance de pompe et la puissance laser est de 48%.

La qualité du faisceau laser reste excellente à de telles valeurs de puissance, et les performances du dispositif sont limitées par la puissance de pompe disponible de la diode.

Le spectre de sortie du laser mesuré à pleine puissance de sortie à partir d'un analyseur de spectre optique avec une résolution de 0.07nm.

Le laser oscille spontanément sur un intervalle spectral de 6 nm centré à 977 nm.

En raison du filtrage spectral efficace de l'action de la combinaison des deuxième et troisième miroirs l'émission parasite à 1030 nm est 35dB au-dessous du signal maximal du laser à 977 nm.

Plus de 98 % de la densité de puissance spectrale est contenu dans l'intervalle spectral allant de 975 nm à 980 nm.

A titre de comparaison, le spectre de sortie du laser aussi bien que le spectre spontané amplifié de l'émission obtenue en supprimant la rétroaction du miroir.

En outre, la fibre dopée à un diamètre de coeur très fortement augmenté par rapport aux diamètres de fibres monomodes standards (c'est-à-dire présentant des coeurs de diamètre <12µm). Le diamètre du coeur est choisi entre 12 µm et 200 µm. Pour atteindre les très fortes puissances, l'invention met en oeuvre l'utilisation des fibres optiques spéciales à large aire modale (LMA) à saut d'indice ou micro-structurées, pouvant présenter des diamètres de coeur record > allant jusqu'à 80µm actuellement tout en assurant un guidage optique monomode de l'onde laser autour de 977 nm.

Le dispositif selon l'invention permet aussi d'obtenir un laser de haute puissance à 488 nm puisqu'il présente une excellente qualité spatiale permettant de focaliser le faisceau sur un volume le plus réduit possible et une puissance suffisante pour obtenir des efficacités importantes dans l'étage non-linéaire.

Ce dispositif constitue un milieu laser à solide émettant directement à des longueurs d'onde à sensiblement 488 nm, qui offre l'avantage d'être moins encombrant, plus fiable et moins coûteux que des dispositifs utilisant un milieu solide émettant entre 800 et 1100 nm auquel est adjoint un étage d'optique non-linéaire pour effectuer des mélanges ou des doublages de fréquence. Ces dispositifs mettent en oeuvre un procédé consistant à produire un rayonnement à 976 nm ou à 1029 nm et à le doubler en fréquence. Un tel étage non-linéaire de doublage de fréquence impose des contraintes fortes sur les caractéristiques du faisceau fondamental à 976 ou 1029 nm.

En effet dans une variante la fibre optique photonique peut être dopée avec des ions de terres rares ou d'ions métalliques autres que des ions Ytterbium.

## Revendications

1. Dispositif de pompage optique comportant :
- une source optique à fibre émettant un rayonnement de qualité modale transverse très élevée contrôlé à une longueur d'onde inférieure à 1000 nm,
- au moins un élément en matériau amplificateur,
- des moyens pour introduire une lumière de pompage dans ledit élément en matériau amplificateur dopé, et
- des moyens de refroidissement dudit matériau amplificateur,
**caractérisé en ce que** la lumière de pompage est émise par la source optique à fibre à une puissance moyenne supérieure à 2 W et une qualité modale **caractérisée par** un M2 < 5, en ce que l'élément en matériau amplificateur est un cristal long dopé avec un dopant de terre rare choisi parmi l'Ytterbium, Thulium, Erbium, ou l'une quelconque des combinaisons de ces terres rares, et en ce que la source à fibre a un spectre d'émission compris dans une bande 970-985 nm.

2. Dispositif de pompage optique selon la revendication précédente, **caractérisé en ce que** la source à fibre comprend :
- au moins une diode laser ayant une longueur d'onde d'excitation comprise entre 750 nm et 976 nm, apte à émettre une onde de pompe,
- une gaine de pompage,
- un tronçon de fibre optique amplificatrice gainée présentant deux extrémités, ladite fibre optique amplificatrice comportant un coeur comprenant une partie cylindrique dopée avec la terre rare Ytterbium, et
- des moyens de couplage de ladite source de pompe dans la gaine de la fibre dopée.

3. Dispositif de pompage optique selon l'une des revendications précédentes, **caractérisé en ce que** l'élément en matériau amplificateur dopé avec un dopant de terre rare est choisi parmi une fibre optique, un cristal, une combinaison de ces deux éléments.

4. Dispositif de pompage optique selon la revendication précédente, **caractérisé en ce que** la fibre optique est choisie parmi une fibre simple coeur, une fibre double coeur, une fibre cristalline.

5. Dispositif de pompage optique selon l'une des revendications précédentes, **caractérisé en ce que** les moyens de refroidissement sont agencés le long de l'élément en matériau amplificateur dopé.

6. Dispositif de pompage optique selon l'une des revendications précédentes, **caractérisé en ce que** les moyens de refroidissement réalisent un refroidissement dudit élément en matériau amplificateur dopé par air, eau ou encore par cryogénique.

7. Dispositif de pompage optique selon la revendication précédente, **caractérisé en ce que** les combinaisons sont choisies parmi Thulium/Ytterbium, Erbium/Ytterbium.

8. Dispositif de pompage optique selon la revendication 7, **caractérisé en ce que** l'Ytterbium utilisée est choisie parmi Yb :SYS, Yb :BOYS, Yb :GdCoB, Yb:CaGdAlO4, Yb:KGW, Yb:YAG, Yb:CaF2, Yb:KGW, Yb :KYW, Yb:GSO, Yb :GYSO, Yb :verre.

9. Dispositif de pompage optique selon l'une des revendications précédentes, **caractérisé en ce que** les moyens permettant d'introduire une lumière de pompage dans le matériau amplificateur se rapportent à des moyens de couplage et des éléments sélectifs.

10. Dispositif de pompage optique selon la revendication précédente, **caractérisé en ce que** les moyens de couplage comprennent des lentilles choisies parmi l'une quelconque au moins des lentilles suivantes: microlentille, lentille cylindrique, elliptique, hyperbolique, ou des condensateurs asphériques.

11. Dispositif de pompage optique selon l'une des revendications 9 ou 10, **caractérisé en ce que** les éléments sélectifs se rapportent à un élément choisi parmi l'un quelconque au moins des éléments suivants: un miroir dichroïque, un filtre absorbant ou interférométrique, une courbure de la fibre amplificatrice, un élément dopant ajouté dans la constitution du coeur de la fibre amplificatrice, un réseau massif externe, un prisme, un réseau de Bragg photo.

12. Architecture d'amplification comportant des moyens de pompage optique **caractérisé en ce que** ces moyens de pompage optique comprennent le dispositif de pompage optique selon l'une quelconque des revendications 1 à 11.

13. Architecture d'amplification selon la revendication 12, **caractérisée en ce qu'**elle est choisie parmi :
- un oscillateur ;
- un amplificateur à multipassage ;
- un amplificateur régénérateur ;
- une architecture de pompage coeur d'une fibre active dopée Yb, Tm, Er ou une quelconque combinaison, et
- une architecture de pompage d'une fibre cristalline où le faisceau de pompe n'est pas guidé par ladite fibre cristalline.

14. Architecture d'amplification selon l'une des revendications 12 ou 13 précédentes, **caractérisée en ce qu'**il est apte à produire un rayonnement à une longueur d'onde supérieure à 1000 nm dont l'amplification est obtenue à partir du dispositif de pompage optique selon les revendications 1 à 11.

## Patentansprüche

1. Optische Pumpvorrichtung, aufweisend:
- eine faseroptische Quelle, die eine Strahlung in sehr hoher, kontrollierter transverser modaler Qualität mit einer Wellenlänge unter 1000 nm sendet,
- mindestens ein Element aus Verstärkungsmaterial,
- Mittel, um ein Pumplicht in das Element aus dotiertem Verstärkungsmaterial einzuleiten, und
- Kühlmittel des Verstärkungsmaterials,
**dadurch gekennzeichnet, dass** das Pumplicht von der faseroptischen Quelle mit einer durchschnittlichen Leistung über 2 W und einer modalen Qualität, **gekennzeichnet durch** einen M2 < 5, gesendet wird, und **dadurch**, dass das Element aus Verstärkungsmaterial ein langer Kristall, dotiert mit einem Dotierungsmittel aus seltener Erde, ausgewählt aus dem Ytterbium, Thulium, Erbium oder einer der Kombinationen dieser seltenen Erden, ist, und **dadurch**, dass die Faserquelle ein Sendespektrum in einem Band 970-985 nm inklusive hat.

2. Optische Pumpvorrichtung nach dem vorangehenden Anspruch, **dadurch gekennzeichnet, dass** die Faserquelle umfasst:
- mindestens eine Laserdiode mit einer Erregungswellenlänge zwischen 750 nm und 976 nm, die imstande ist, eine Pumpwelle zu senden,
- einen Pumpmantel,
- einen Abschnitt einer ummantelten optischen Verstärkungsfaser, aufweisend zwei Enden, wobei die optische Verstärkungsfaser einen Kern aufweist, der einen zylindrischen Teil umfasst, der mit der seltenen Erde Ytterbium dotiert ist, und
- Kopplungsmittel der Pumpquelle im Mantel der dotierten Faser.

3. Optische Pumpvorrichtung nach einem der vorangehenden Ansprüche, **dadurch gekennzeichnet, dass** das Element aus mit einem Dotierungsmittel aus seltener Erde dotiertem Verstärkungsmaterial aus einer optischen Faser, einem Kristall, einer Kombination dieser zwei Elemente ausgewählt ist.

4. Optische Pumpvorrichtung nach dem vorangehenden Anspruch, **dadurch gekennzeichnet, dass** die optische Faser aus einer Einfachkernfaser, einer Doppelkernfaser, einer kristallinen Faser ausgewählt ist.

5. Optische Pumpvorrichtung nach einem der vorangehenden Ansprüche, **dadurch gekennzeichnet, dass** die Kühlmittel entlang des Elements aus dotiertem Verstärkungsmaterial angeordnet sind.

6. Optische Pumpvorrichtung nach einem der vorangehenden Ansprüche, **dadurch gekennzeichnet, dass** die Kühlmittel eine Kühlung des Elements aus dotiertem Verstärkungsmaterial mittels Luft, Wasser oder auch eines Kryogens durchführen.

7. Optische Pumpvorrichtung nach dem vorangehenden Anspruch, **dadurch gekennzeichnet, dass** die Kombinationen aus Thulium/Ytterbium, Erbium/Ytterbium ausgewählt sind.

8. Optische Pumpvorrichtung nach Anspruch 7, **dadurch gekennzeichnet, dass** das verwendete Ytterbium aus Yb:SYS, Yb:BOYS, Yb:GdCoB, Yb:CaGdAlO4, Yb:KGW, Yb:YAG, Yb:CaF2, Yb:KGW, Yb:KYW, Yb:GSO, Yb:GYSO, Yb:Glas ausgewählt ist.

9. Optische Pumpvorrichtung nach einem der vorangehenden Ansprüche, **dadurch gekennzeichnet, dass** die Mittel, die erlauben, ein Pumplicht in das Verstärkungsmaterial einzuleiten, sich auf Kopplungsmittel und selektive Elemente beziehen.

10. Optische Pumpvorrichtung nach dem vorangehenden Anspruch, **dadurch gekennzeichnet, dass** die Kopplungsmittel Linsen umfassen, die aus mindestens einer der folgenden Linsen ausgewählt sind: Mikrolinse, zylindrische, elliptische, hyperbolische Linse oder asphärischen Kondensatoren.

11. Optische Pumpvorrichtung nach einem der Ansprüche 9 oder 10, **dadurch gekennzeichnet, dass** sich die selektiven Elemente auf ein Element beziehen, das aus mindestens einem der folgenden Elemente ausgewählt ist: einem dichroitischen Spiegel, einem absorbierenden oder interferometrischen Filter, einer Krümmung der Verstärkerfaser, einem dotierenden Element, hinzugefügt in die Konstitution des Kerns der Verstärkerfaser, einem externen massiven Spiegel, einem Prisma, einem Braggphotospiegel.

12. Verstärkungsarchitektur, aufweisend optische Pumpmittel, **dadurch gekennzeichnet, dass** diese optischen Pumpmittel die optische Pumpvorrichtung nach einem der Ansprüche 1 bis 11 umfassen.

13. Verstärkungsarchitektur nach Anspruch 12, **dadurch gekennzeichnet, dass** sie ausgewählt ist aus:
- einem Oszillator;
- einem Multipass-Verstärker;
- einem regenerativen Verstärker;
- einer Kernpumparchitektur einer mit Yb, Tm, Er oder einer beliebigen Kombination dotierten aktiven Faser, und
- einer Pumparchitektur einer kristallinen Faser, wobei der Pumpstrahl nicht von der kristallinen Faser geleitet wird.

14. Verstärkungsarchitektur nach einem der vorangehenden Ansprüche 12 oder 13, **dadurch gekennzeichnet, dass** sie imstande ist, eine Strahlung mit einer Wellenlänge über 1000 nm zu erzeugen, deren Verstärkung mit der optischen Pumpvorrichtung nach den Ansprüchen 1 bis 11 erhalten wird.

## Claims

1. Optical pumping device comprising:
- a fiber-based optical source emitting a controlled radiation beam with a very high transverse mode quality at a wavelength shorter than 1000 nm;
- at least one element made of an amplifying material;
- means for introducing pumping light into said doped amplifying material element; and
- means for cooling said amplifying material,
**characterized in that** the pumping light is emitted by the fiber-based optical source with an average power higher than 2 W and a mode quality **characterized by** an M2<5, in that the element made of an amplifying material is a long crystal doped with a rare-earth dopant chosen from ytterbium, thulium, erbium, or anyone of the combinations of these rare earths and in that the fiber-based source has an emission spectrum lying in a band between 970 and 985 nm.

2. Optical pumping device according to the preceding claim, **characterized in that** the fiber-based source comprises:
- at least one laser diode having an excitation wavelength between 750 nm and 976 nm, which laser diode is able to emit a pumping wave;
- a pumping cladding;
- a section of clad amplifying optical fiber having two ends, said amplifying optical fiber containing a core comprising a cylindrical part doped with ytterbium, and
- means for coupling said pumping source to the cladding of the doped fiber.

3. Optical pumping device according anyone of the preceding claims, **characterized in that** the element made of an amplifying material doped with a rare-earth dopant is chosen from an optical fiber, a crystal, and a combination of these two elements.

4. Optical pumping device according to the preceding claim, **characterized in that** the fiber is chosen from a single-core fiber, a twin-core fiber, and a crystal fiber.

5. Optical pumping device according to anyone of the preceding claims, **characterized in that** the cooling means are arranged along the element made of a doped amplifying material.

6. Optical pumping device according to anyone of the preceding claims, **characterized in that** the cooling means cool said element made of a doped amplifying material with air, water or even cryogenically.

7. Optical pumping device according to the preceding claim, **characterized in that** the combinations are chosen from thulium/ytterbium and erbium/ytterbium.

8. Optical pumping device according to claim 7, **characterized in that** the ytterbium-doped material used is chosen from Yb:SYS, Yb:BOYS, Yb:GdCoB, Yb:CaGdAlO₄, Yb:KGW, Yb:YAG, Yb:CaF₂, Yb:KGW, Yb:KYW, Yb:GSO, Yb:GYSO, and Yb:glass.

9. Optical pumping device according to anyone of the preceding claims, **characterized in that** the means allowing pumping light to be introduced into the amplifying material are coupling means and selecting elements.

10. Optical pumping device according to the preceding claim, **characterized in that** the coupling means comprise lenses chosen from any one of at least the following lenses: microlenses, cylindrical lenses, elliptical lenses, hyperbolic lenses, and aspheric condenser lenses.

11. Optical pumping device according to claim 9 or 10, **characterized in that** the selecting elements relate to an element chosen from at least one of any of the following elements: a dichroic mirror, an absorbing or interferometric filter, a bend in the amplifying fiber, a dopant element added to the core of the amplifying fiber, an external volume grating, a prism, and a fiber Bragg grating.

12. Amplification architecture comprising optical pumping means, **characterized in that** these optical pumping means comprise the optical pumping device according to anyone of claims 1 to 11.

13. Amplification architecture according to claim 12, **characterized in that** it is chosen from:
- an oscillator;
- a multipass amplifier;
- a regenerative amplifier;
- an architecture for pumping a core of an active fiber doped with Yb, Tm, Er or any combination thereof; and
- an architecture for pumping a crystal fiber in which the pumping beam is not guided by said crystal fiber.

14. Amplification architecture according to anyone of claims 12 or 13, **characterized in that** it is able to produce a radiation beam at a wavelength longer than 1000 nm, the amplification of which is obtained using an optical pumping device according to claims 1 to 11.
